# EUROPEAN PATENT SPECIFICATION

(11) **EP 2 132 448 B1**
(45) Date of publication and mention of the grant of the patent: **18.06.2014**
(21) Application number: 08718596.3
(22) Date of filing: 03.03.2008
(51) Int. Cl.: F16B 5/02

(54) **COMPONENT JOINING**
KOMPONENTENVERBINDUNG
JOINTURE DE COMPOSANT

(30) Priority: 28.03.2007 GB 0705938
(43) Date of publication of application: 16.12.2009
(73) Proprietor: ROLLS-ROYCE PLC, London, SW1E 6AT (GB)
(72) Inventor: SIMPSON, Samuel, Leyton, Nottingham NG4 3EY (GB)
(74) Representative: Roberts, Nicholas John
(86) International application number: PCT/GB2008/000729
(87) International publication number: WO 2008/117011

(56) References cited:
- WO-A-01/31208
- US-A- 3 498 655
- US-A- 3 967 432
- US-A- 4 116 510

## Description

The present invention relates to component joining. In particular, but not exclusively, embodiments of the invention relate to a ductile sheet for securing to a component and to a jointed arrangement comprising first and second ductile sheets secured together. Embodiments of the invention also relate to a method for securing a first ductile sheet to a second ductile sheet.

A system for joining panels according to the preamble of claim 1 is known from US 3 498 655 A.

It is desirable to be able to secure ductile sheets together such that their respective planes are generally perpendicular, whereby the ductile sheets define a T-joint, and there is often a requirement that one of the ductile sheets, which may act as a cover plate, presents a flat surface with no components projecting above the plane of the outer surface of the cover plate.

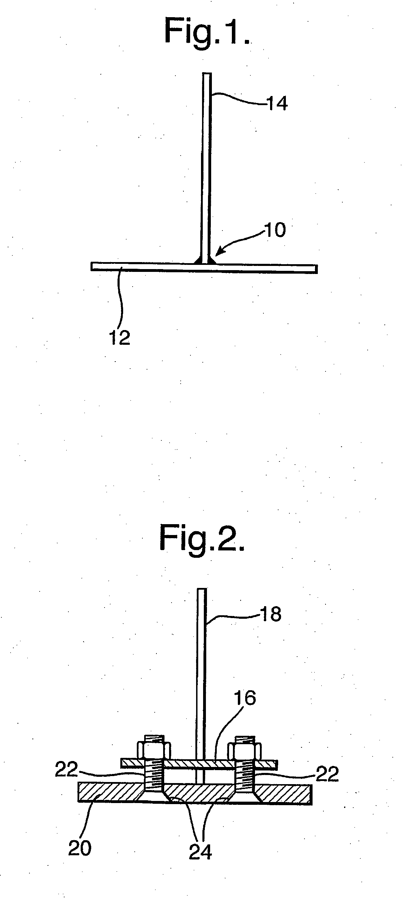

Referring to Fig. 1, one method of securing ductile sheets together to form a T-joint is to use a welded joint in which a fillet weld 10 is used to secure two ductile sheets 12, 14 together. However, welding is a complex operation requiring specialised equipment. Heat created by welding can also distort the ductile sheets 12, 14 and possibly affect their material properties and, furthermore, the resultant welded joint is permanent meaning that the ductile sheets 12, 14 cannot be easily disassembled.

Another method of securing ductile sheets together to form a T-joint is shown in Fig. 2. In this method, a retention bar 16 is located in an aperture in an anchor plate 18, and opposite ends of the retention bar 16 are secured to a cover plate 20 using threaded fasteners 22. In order to ensure that the cover plate 20 presents a flat surface, countersunk apertures 24 must be formed in the cover plate 20. This method has a number of disadvantages. For example, the cover plate 20 must be sufficiently thick to accommodate the heads of the countersunk threaded fasteners 22, and this adds cost and weight to the resultant joint. Countersunk apertures 24 must be formed in the cover plate 20, and this additional operation requires additional tooling, thus increasing cost and lead-time. The requirement for two nuts and threaded fasteners 22 and the retention bar 16 increases cost, weight and assembly time. Another problem is that the retention bar 16 can distort during tightening of the threaded fasteners 22.

It would therefore be desirable to be able to form a jointed arrangement, having a T-joint, in which the abovementioned disadvantages are reduced.

According to one aspect of the present invention, there is provided a jointed arrangement comprising a first ductile sheet and a component, wherein the first ductile sheet includes an aperture for receiving a threaded fastener, the fastener engaging a threaded nut to secure the ductile sheet to the component, characterised in that the ductile sheet includes a deformable region in which the aperture is defined whereby the deformable region is deformable out of the plane of the ductile sheet during tightening of the threaded fastener to secure the ductile sheet to the component.

The component may include a recess in which the deformable region of the first ductile sheet is received following tightening of the threaded fastener to secure the first ductile sheet to the second ductile sheet.

Preferably the component includes a passage, extending from the recess for receiving a threaded shank of the threaded fastener.

The passage may include a nut receiving portion for receiving the threaded nut in which the threaded shank of the threaded fastener is locatable to thereby secure the first ductile sheet to the component.

The nut receiving portion may include an anti-rotation region which is operable to prevent rotation of the threaded nut during rotation of the threaded shank of the threaded fastener relative to the threaded nut.

The edges of the passage may be tapered to define the anti-rotation region. The edges of the passage may include inwardly directed projections to define the anti-rotation region.

The component may include apertures substantially adjacent to the inwardly directed projections to permit localised deformation of the second ductile sheet.

Preferably the component includes a nut retaining member which is locatable in an aperture of the threaded nut to retain the nut in the nut receiving portion prior to insertion of the threaded shank of the threaded fastener into the aperture of the threaded nut.

Preferably the nut retaining member is displaceable out of the aperture of the threaded nut by the threaded shank of the threaded fastener during tightening rotation of the threaded fastener.

Preferably the first ductile sheet includes at least one locating recess and the component includes at least one complementary locating projection.

Preferably the component is in the form of a second ductile sheet to which the first ductile sheet (32, 132) is secured, wherein the first ductile sheet is secured along an edge of the second ductile sheet such that the planes of the first and second ductile sheets are generally perpendicular.

Preferably the aperture in the first ductile sheet is defined substantially centrally in the deformable region.

The aperture may be defined by an annular member.

The deformable region may comprises a plurality of deformable ribs extending between the ductile sheet and the annular member to support the annular member and enable its deformation out of the plane of the ductile sheet during tightening of the threaded fastener.

Preferably the deformable ribs are in the form of spokes. The deformable ribs may be of generally helical or spiral configuration.

Preferably there is provided a method for securing a first ductile sheet along an edge of a second ductile sheet with the planes of the first and second ductile sheets generally perpendicular, the first ductile sheet including a deformable region in which an aperture is defined, the method comprising locating a threaded fastener in the aperture and causing engagement of the threaded fastener with a threaded formation of the second ductile sheet, and rotating the threaded fastener to tighten it such that tightening rotation of the threaded fastener deforms the deformable region out of the plane of the first ductile sheet and into a recess defined in the second ductile sheet.

The method may comprise rotating the threaded fastener to deform the deformable region such that a head of the threaded fastener may be substantially coplanar with the plane of the first ductile sheet following deformation of the deformable region.

The method may comprise rotating the threaded fastener to deform the deformable region such that a head of the threaded fastener may extend partially into the recess in the second ductile sheet following deformation of the deformable region.

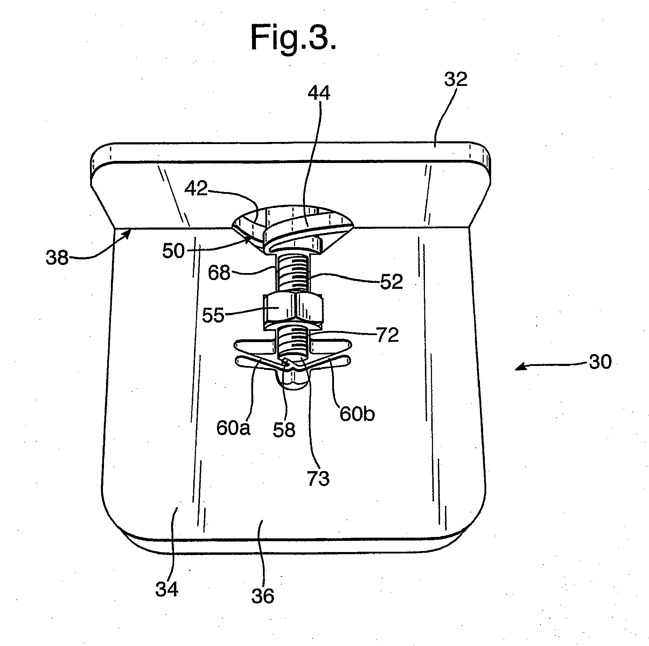

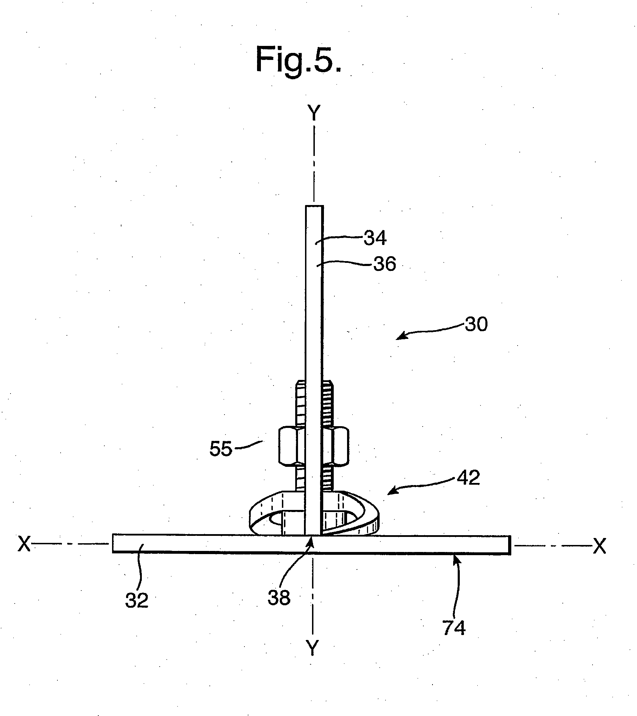

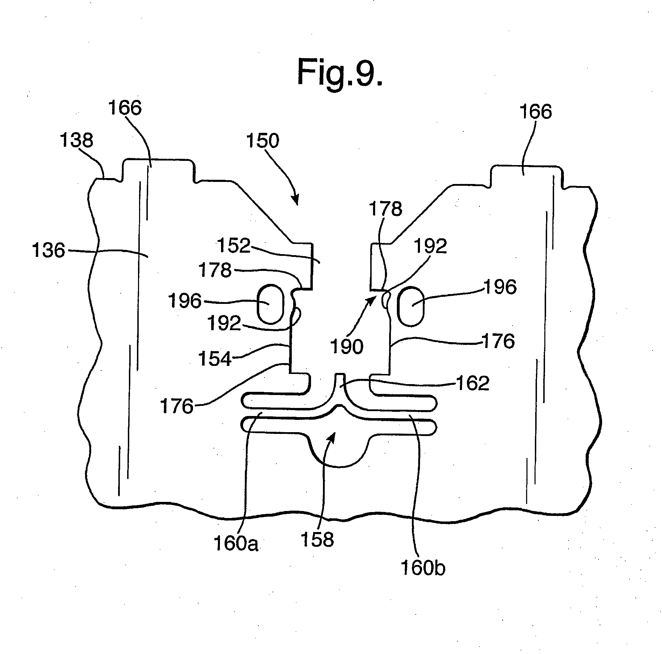

Embodiments of the present invention will now be described by way of example only and with reference to the accompanying drawings, in which:-
F ig. 3 is a diagrammatic perspective view of a jointed arrangement;
F igs. 4 and 5 are further diagrammatic views of the jointed arrangement of Fig. 3;
F ig. 6 is a diagrammatic plan view of a first ductile sheet of the jointed arrangement of Figs. 3 to 5;
F ig. 7 is a diagrammatic side view of a second ductile sheet of the jointed arrangement of Figs. 3 to 5;
F ig. 8 is an enlarged diagrammatic view of part of the jointed arrangement of Figs. 3 to 5;
F ig. 9 is a diagrammatic view of part of a alternative second ductile sheet for an alternative jointed arrangement;
F ig. 10 is a diagrammatic view of an alternative jointed arrangement including the alternative second ductile sheet of Fig. 9; and
F ig. 11 is a diagrammatic plan view of an alternative first ductile sheet.

Referring to the drawings, there is shown a jointed arrangement 30 in which a first ductile sheet 32 is secured to a component 34 in the form of a second ductile sheet 36. The first ductile sheet 32 is secured along an edge 38 of the second ductile sheet 36 in such a way that respective planes X-X and Y-Y of the first and second ductile sheets 32, 36 are generally perpendicular. The resulting joint thereby defined between the first and second ductile sheets 32, 36 is a T-joint.

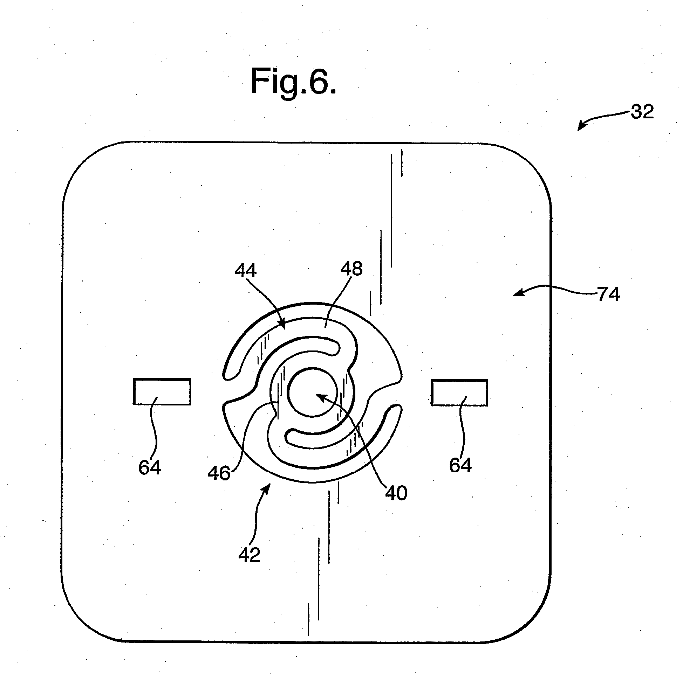

The first ductile sheet 32 includes a deformable region 42 in substantially the centre of which is located an aperture 40. The deformable region 42 generally comprises a plurality of deformable ribs 44 extending between the first ductile sheet 32 and the aperture 40 which is defined by a generally annular ring member 46. In the embodiment illustrated in Fig. 6, the deformable ribs 44 are in the form of spokes 48. The deformable ribs 44 and the annular member 46 defining the aperture 40 are formed by removing appropriate material from the first ductile sheet 32, for example by stamping or another suitable metalworking operation.

Referring in particular to Figs. 3 and 7, it will be seen that the second ductile sheet 36 defines a recess 50. The recess 50 extends into a passage 52 which, as can be seen clearly in Fig. 8, includes a nut receiving portion 54 for receiving a conventional nut 55 having an internally threaded aperture 56. In order to initially retain the nut 55 within the nut receiving portion 54, the second ductile sheet 36 includes a nut retaining member 58.

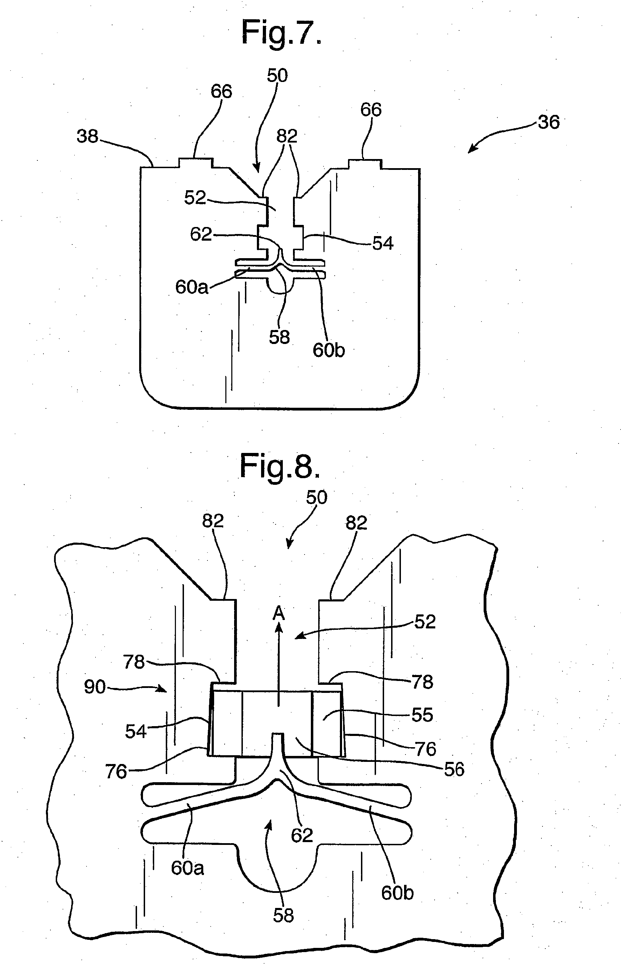

Referring initially to Fig. 7, it will be seen that the nut retaining member 58 comprises two lateral members 60a, 60b and an upstanding member 62. Following location of the nut 55 within the nut receiving portion 54, as shown in Fig. 8 the lateral members 60a, 60b can be deformed in such a way that the upstanding member 62 enters the internally threaded aperture 56 of the nut 55. Location of the upstanding member 62 in the aperture 56 provides sufficient constraint to the nut 55 so that it is unable to fall sideways out of the nut receiving portion 54.

When it is desired to secure the first and second ductile sheets 32, 36 together to form a jointed arrangement 30 having a T-joint, the first and second ductile sheets 32, 36 are located relative to each other with their respective planes X-X and Y-Y generally perpendicular, such that the deformable region 42 of the first ductile sheet 32 is located substantially adjacent to the recess 50 in the second ductile sheet 36.

In order to facilitate appropriate relative location of the deformable region 42 and the recess 50 in the respective first and second ductile sheets 32, 36, the first and second ductile sheets 32, 36 are provided with appropriate locating features in the form of locating recesses 64 in the first ductile sheet 32 and locating projections 66 which extend from the edge 38 of the second ductile sheet 36 and which are locatable in the locating recesses 64 in the first ductile sheet 32.

After a nut 55 has been located in the nut receiving portion 54 in the second ductile sheet 36 and the nut retaining member 58 appropriately deformed to retain the nut 55 in position in the nut receiving portion 54, and with the first and second ductile sheets 32, 36 located relative to each other to form a T-joint, a threaded fastener 68 having a head 70 and a threaded shank 72 is used to secure the first and second ductile sheets 32, 36 together.

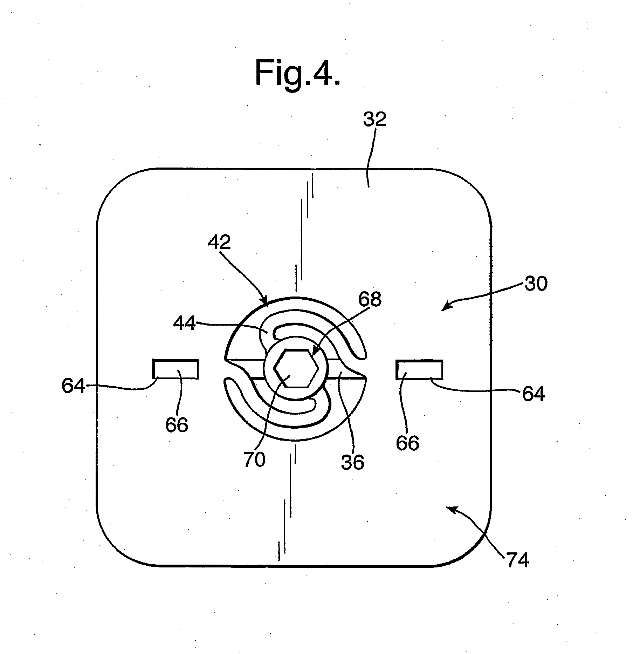

As can be seen clearly in Figs. 3 and 4, the threaded shank 72 is passed through the aperture 40 defined by the deformable region 42 in the first ductile sheet 32, through the recess 50 in the second ductile sheet 36 and into the passage 52 until it encounters the threaded nut 55. Upon encountering the threaded nut 55, an appropriate tool (not shown) is used to rotate the threaded fastener 68 such that the threaded shank 72 enters into threaded engagement with the threaded formation of the internally threaded aperture 56 of the nut 55. As soon as the threaded shank 72 enters into engagement with the internally threaded aperture 56, the nut 55 is adequately retained in the nut receiving portion 54 by the threaded fastener 68 and the nut retaining member 58 is no longer needed. Accordingly, during continued rotation of the threaded fastener 68 to tighten it, a tip 73 of the threaded shank 72 engages the upstanding member 62 of the nut retaining member 58 and pushes it out of the threaded aperture 56, thereby deforming the lateral members 60a, 60b.

Continued rotation of the threaded fastener 68 results in a force between the nut 55 and the annular member 46 with which the head 70 of the threaded fastener 68 is in engagement. Since the annular member 46 is supported by the deformable ribs 44, the deformable region 42, which comprises the deformable ribs 44 and the annular member 46, deforms out of the plane of the first ductile sheet 32 such that the deformable ribs 44 and the annular member 46 enter into the recess 50 in the second ductile sheet 36. This is highly advantageous as it enables the head 70 of the threaded fastener 68 to become at least coplanar with the first ductile sheet 32, or indeed under continued rotation of the threaded fastener 68 to tighten it, to at least partially enter into the recess 50 in the second ductile sheet 36. In both of these cases, entry of the deformable ribs 44 and the annular member 46 into the recess 50 in the second ductile sheet 36 ensures that the threaded fastener 68 can be tightened to a sufficient extent that the head 70 of the threaded fastener does not protrude above an outer surface 74 of the first ductile sheet 32.

In order to prevent excessive deformation of the deformable ribs 44 which could result in them being damaged, the recess 50 includes shoulders 82 against which the deformable ribs 44 abut when the threaded fastener 68 has been tightened to a sufficient extent.

The nut receiving portion 54 includes an anti-rotation region 90 which, in the embodiment of Fig. 8, is defined by tapered edges 76 of the passage 52 in the second ductile sheet 36. As the threaded fastener 68 is rotated into threaded engagement with the threaded nut 55 to tighten it and thereby secure the first and second ductile sheets 32, 36 together, the force exerted on the nut 55, when the head 70 of the threaded fastener 68 engages the annular member 46 of the deformable region 46, causes the nut 55 to move in the direction of arrow A, into abutment with shoulders 78. In this position, the distance between the tapered edges 76 is less than the outer diameter of the nut 55, thus causing localised deformation of the second ductile sheet 36 and causing the tapered edges 76 to firmly engage the nut and prevent it from rotating within the anti-rotation region 90 of the nut receiving portion 54.

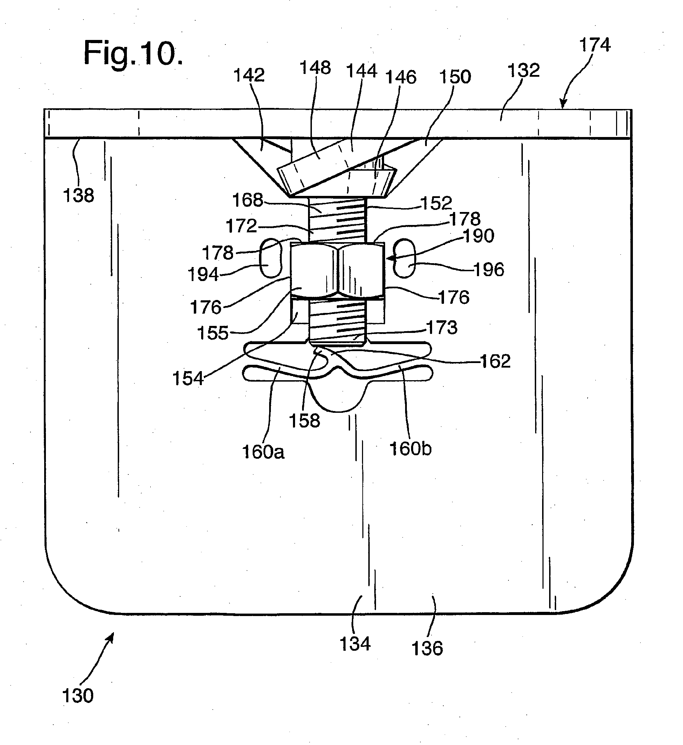

Figs. 9 and 10 illustrate an alternative embodiment in which features corresponding to the embodiment of Figs. 3 to 8 are given the same reference numerals, prefixed by the number 1.

In the embodiment of Figs. 9 and 10, the edges 176 of the passage 152 in the second ductile sheet 136 include inwardly directed projections 192 defining the anti-rotation region 190. The distance between innermost points of the inwardly directed projections 192 is less than the outer diameter of the nut 155. Accordingly, when the nut 155 engages the projections 192, during rotation of the threaded fastener 168 to tighten it, the force exerted on the projections 192 by the nut 155 causes localised deformation of the second ductile sheet 136, and in particular deformation of the projections 192. The nut 155 is thus firmly gripped in the anti-rotation region 190 of the nut receiving portion 154.

In order to permit deformation of the projections 192 and hence localised deformation of the second ductile sheet 136 in the region of the inwardly directed projections 192, the second ductile sheet 136 includes apertures 196 substantially adjacent to the projections 192. When a comparison is made between Figs. 9 and 10, it will be readily seen that the apertures 196 have permitted localised deformation of the second ductile sheet 136 adjacent to the deformed projections 192.

The provision of an anti-rotation region 90, 190 obviates the need to use a spanner or other means to prevent the nut 55, 155 from rotating, and this is particularly advantageous as it will be appreciated that under some circumstances the nut 55, 155 will not be accessible when the first ductile sheet 32, 132 is positioned for fastening to the second ductile sheet 36, 136. This also has the added advantage that in the event that the threaded fastener 68, 168 needs to be removed to allow disassembly of the first and second ductile sheets 32, 132, 36, 136, it can simply be rotated in an appropriate direction whilst rotation of the nut 55, 155 will still be prevented by the anti-rotation region 90, 190, the nut 55 essentially having become jammed in the anti-rotation region 90, 190 of the nut receiving portion 54, 154 during previous tightening of the threaded fastener 68, 168. The nut 55, 155 thus typically remains secured or jammed in the nut receiving portion 54, 155 even after removal of the threaded fastener 68, 168.

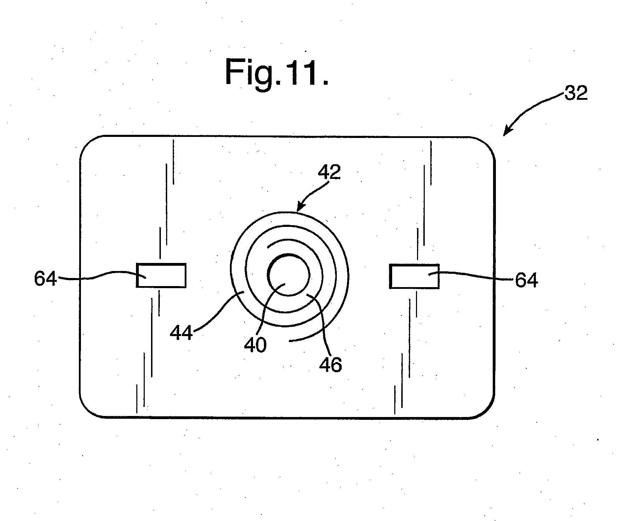

Fig. 11 shows an alternative form of first ductile sheet 32 in which the deformable ribs 44 are generally spiral or helical and are formed by providing a spiral or helical cut through the material of the first ductile sheet 32, centred on the aperture 40.

Although embodiments of the invention have been described in the preceding paragraphs with reference to various examples, it should be appreciated that various modifications to the examples given may be made without departing from the scope of the present invention, as claimed.

For example, any suitable form of threaded fastener 68 may be used to secure the first and second ductile sheets 32, 36 together. The component 34 does not necessarily have to be in the form of a ductile sheet and could alternatively be any suitably shaped component. The deformable region 42 may be of any suitable configuration and formed by any suitable method.

## Claims

1. A jointed arrangement (30, 130) comprising a first ductile sheet (32, 132) and a component (34, 134), wherein the first ductile sheet includes an aperture (40, 140) for receiving a threaded fastener (68, 168), the fastener engaging a threaded nut (55) to secure the ductile sheet (32, 132) to the component (34, 134), **characterised in that** the ductile sheet (32, 132) includes a deformable region (42, 142) in which the aperture (40, 140) is defined whereby the deformable region (42, 142) is deformable out of the plane (X-X) of the ductile sheet (32, 132) during tightening of the threaded fastener (68, 168) to secure the ductile sheet (32, 132) to the component (34, 134).

2. A jointed arrangement (30, 130) according to claim 1, wherein the component (36, 136) includes a recess (50, 150) in which the deformable region (42, 142) of the first ductile sheet (32, 132) is received following tightening of the threaded fastener (68, 168) to secure the first ductile sheet (32, 132) to the second ductile sheet (36, 136).

3. A jointed arrangement (30, 130) according to claim 1 or claim 2, wherein component (36, 136) includes a passage (52, 152), extending from the recess (50, 150) for receiving a threaded shank (72, 172) of the threaded fastener (68, 168).

4. A jointed arrangement (30, 130) according to claim 3, wherein the passage (52, 152) includes a nut receiving portion (54, 154) for receiving the threaded nut (55, 155) in which the threaded shank (72, 172) of the threaded fastener (68, 168) is locatable to thereby secure the first ductile sheet (32, 132) to the component (36, 136).

5. A jointed arrangement (30, 130) according to claim 4, wherein the nut receiving portion (54, 154) includes an anti-rotation region (90, 190) which is operable to prevent rotation of the threaded nut (55, 155) during rotation of the threaded shank (72, 172) of the threaded fastener (68, 168) relative to the threaded nut (55, 155).

6. A jointed arrangement (30) according to claim 5, wherein edges (76) of the passage (52) are tapered to define the anti-rotation region (90).

7. A jointed arrangement (130) according to claim 5, wherein edges (176) of the passage (152) include inwardly directed projections (192) to define the anti-rotation region (190).

8. A jointed arrangement (130) according to claim 7, wherein the component (136) includes apertures (196) substantially adjacent to the inwardly directed projections (192) to permit localised deformation of the second ductile sheet (136).

9. A jointed arrangement (30, 130) according to any of claims 4 to 8, wherein the component (36, 136) includes a nut retaining member (58, 158) which is locatable in an aperture (56, 156) of the threaded nut (55, 155) to retain the nut (55, 155) in the nut receiving portion (54, 154) prior to insertion of the threaded shank (72, 172) of the threaded fastener (68, 168) into the aperture (56, 156) of the threaded nut (55, 155).

10. A jointed arrangement (30, 130) according to claim 9, wherein the nut retaining member (58, 158) is displaceable out of the aperture (56, 156) of the threaded nut (55, 155) by the threaded shank (72, 172) of the threaded fastener (68, 168) during tightening rotation of the threaded fastener (68, 168).

11. A jointed arrangement (30, 130) according to any preceding claim, wherein the first ductile sheet (32, 132) includes at least one locating recess (64, 164) and the component (36, 136) includes at least one complementary locating projection (66, 166).

12. A jointed arrangement according to any of the preceding claims wherein the component (34, 134) is in the form of a second ductile sheet (36, 136) to which the first ductile sheet (32, 132) is secured, wherein the first ductile sheet (32, 132) is secured along an edge (38, 138) of the second ductile sheet (36, 136) such that the planes (X-X, Y-Y) of the first and second ductile sheets (32, 132, 36, 136) are generally perpendicular.

13. A joined arrangement according to any preceding claim, wherein the aperture (40, 140) in the first ductile sheet (32, 132) is defined substantially centrally in the deformable region (42, 142).

14. A joined arrangement according to any preceding claim, wherein the aperture (40', 140) is defined by an annular member (46, 146).

15. A joined arrangement according to claim 14, wherein the deformable region (40, 140) comprises a plurality of deformable ribs (44, 144) extending between the ductile sheet (32, 132) and the annular member (46, 146) to support the annular member (46, 146) and enable its deformation out of the plane (X-X) of the ductile sheet (32, 132) during tightening of the threaded fastener (68, 168).

16. A joined arrangement according to claim 15, wherein the deformable ribs (44, 144) are in the form of spokes (48, 148).

17. A joined arrangement according to claim 15 or claim 16, wherein the deformable ribs (44, 144) are of generally helical or spiral configuration.

## Patentansprüche

1. Verbundene Anordnung (30, 130), die eine erste duktile Lage (32, 132) und eine Komponente (34, 134) umfasst, wobei die erste duktile Lage eine Öffnung (40, 140) zur Aufnahme einer Gewindebefestigungseinrichtung (68, 168) aufweist, wobei die Befestigungseinrichtung mit einer Gewindemutter (55) eingreift, um die duktile Lage (32, 132) an der Komponente (34, 134) zu sichern, **dadurch gekennzeichnet, dass** die duktile Lage (32, 132) einen verformbaren Bereich (42, 142) aufweist, in dem die Öffnung (40, 140) definiert ist, wodurch der verformbare Bereich (42, 142) während dem Festziehen der Gewindebefestigungseinrichtung (68, 168) aus der Ebene (X-X) der duktilen Lage (32, 132) verformbar ist, um die duktile Lage (32, 132) an der Komponente (34, 134) zu sichern.

2. Verbundene Anordnung (30, 130) nach Anspruch 1, wobei die Komponente (36, 136) eine Aussparung (50, 150) aufweist, in welcher der verformbare Bereich (42, 142) der ersten duktilen Lage (32, 132) nach dem Festziehen der Gewindebefestigungseinrichtung (68, 168) aufgenommen wird, um die erste duktile Lage (32, 132) an der zweiten duktilen Lage (36, 136) zu sichern.

3. Verbundene Anordnung (30, 130) nach Anspruch 1 oder 2, wobei die Komponente (36, 136) einen Durchgang (52, 152) aufweist, der sich von der Aussparung (50, 150) zur Aufnahme eines Gewindeschafts (72, 172) der Gewindebefestigungseinrichtung (68, 168) erstreckt.

4. Verbundene Anordnung (30, 130) nach Anspruch 3, wobei der Durchgang (52, 152) einen Mutteraufnahmeabschnitt (54, 154) zur Aufnahme der Gewindemutter (55, 155) umfasst, in dem der Gewindeschaft (72, 172) der Gewindebefestigungseinrichtung (68, 168) positioniert werden kann, um dadurch die erste duktile Lage (32, 132) an der Komponente (36, 136) zu sichern.

5. Verbundene Anordnung (30, 130) nach Anspruch 4, wobei der Mutteraufnahmeabschnitt (54, 154) einen Drehsicherungsbereich (90, 190) aufweist, der so funktionsfähig ist, dass er die Rotation der Gewindemutter (55, 155) während der Rotation des Gewindeschafts (72, 172) der Gewindebefestigungseinrichtung (68, 168) im Verhältnis zu der Gewindemutter (55, 155) verhindert.

6. Verbundene Anordnung (30) nach Anspruch 5, wobei die Kanten (76) des Durchgangs (52) konisch sind, um den Drehsicherungsbereich (90) zu definieren.

7. Verbundene Anordnung (130) nach Anspruch 5, wobei die Kanten (176) des Durchgangs (152) einwärts gerichtete Vorsprünge (192) aufweisen, um den Drehsicherungsbereich (90) zu definieren.

8. Verbundene Anordnung (130) nach Anspruch 7, wobei die Komponente (136) Öffnungen (196) im Wesentlichen angrenzend an die einwärts gerichteten Vorsprünge (192) aufweist, um eine lokale Verformung der zweiten duktilen Lage (136) zu ermöglichen.

9. Verbundene Anordnung (30, 130) nach einem der Ansprüche 4 bis 8, wobei die Komponente (36, 136) ein Muttersicherungselement (58, 158) aufweist, das in einer Öffnung (56, 156) der Gewindemutter (55, 155) positioniert werden kann, um die Mutter (55, 155) in dem Mutteraufnahmeabschnitt (54, 154) zu halten, bevor der Gewindeschaft (72, 172) der Gewindebefestigungseinrichtung (68, 168) in die Öffnung (56, 156) der Gewindemutter (55, 155) eingeführt wird.

10. Verbundene Anordnung (30, 130) nach Anspruch 9, wobei das Muttersicherungselement (58, 158) durch den Gewindeschaft (72, 172) der Gewindebefestigungseinrichtung (68, 168) während der festziehenden Rotation der Gewindebefestigungseinrichtung (68, 168) aus der Öffnung (56, 156) der Gewindemutter (55, 155) versetzt werden kann.

11. Verbundene Anordnung (30, 130) nach einem der vorstehenden Ansprüche, wobei die erste duktile Lage (32, 132) mindestens eine Führungsaussparung (64, 164) aufweist, und wobei die Komponente (36, 136) mindestens einen komplementären Führungsvorsprung (66, 166) aufweist.

12. Verbundene Anordnung nach einem der vorstehenden Ansprüche, wobei die Komponente (34, 134) in Form einer zweiten duktilen Lage (36, 136) vorgesehen ist, an der die erste duktile Lage (32, 132) gesichert ist, wobei die erste duktile Lage (32, 132) entlang einer Kante (38, 138) der zweiten duktilen Lage (36, 136) gesichert ist, so dass die Ebenen (X-X, Y-Y) der ersten und zweiten duktilen Lagen (32, 132, 36, 136) allgemein senkrecht sind.

13. Verbundene Anordnung nach einem der vorstehenden Ansprüche, wobei die Öffnung (40, 140) in der ersten duktilen Lage (32, 132) im Wesentlichen zentral in dem verformbaren Bereich (42, 142) definiert ist.

14. Verbundene Anordnung nach einem der vorstehenden Ansprüche, wobei die Öffnung (40, 140) durch ein ringförmiges Element (46, 146) definiert ist.

15. Verbundene Anordnung nach Anspruch 14, wobei der verformbare Bereich (40, 140) eine Mehrzahl von verformbaren Rippen (44, 144) umfasst, die sich zwischen der duktilen Lage (32, 132) und dem ringförmigen Element (46, 146) erstrecken, um das ringförmige Element (46, 146) zu stützen und um dessen Verformung aus der Ebene (X-X) der duktilen Lage (32, 132) während dem Festziehen des Gewindebefestigungselements (68, 168) zu ermöglichen.

16. Verbundene Anordnung nach Anspruch 15, wobei die verformbaren Rippen (44, 144) in Form von Speichen (48, 148) vorgesehen sind.

17. Verbundene Anordnung nach Anspruch 15 oder 16, wobei die verformbaren Rippen (44, 144) eine allgemein schraubenförmige oder spiralförmige Konfiguration aufweisen.

## Revendications

1. Agencement articulé (30, 130) comprenant une première feuille ductile (32, 132) et un composant (34, 134), dans lequel la première feuille ductile comprend une ouverture (40, 140) pour recevoir une fixation filetée (68, 168), la fixation entrant en prise avec un écrou fileté (55) pour fixer la feuille ductile (32, 132) sur le composant (34, 134), **caractérisé en ce que** la feuille ductile (32, 132) comprend une région déformable (42, 142) dans laquelle l'ouverture (40, 140) est définie, moyennant quoi la région déformable (42, 142) est déformable hors du plan (X-X) de la feuille ductile (32, 132) pendant le serrage de la fixation filetée (68, 168) pour fixer la feuille ductile (32, 132) sur le composant (34, 134).

2. Agencement articulé (30, 130) selon la revendication 1, dans lequel le composant (36, 136) comprend un évidement (50, 150) dans lequel la région déformable (42, 142) de la première feuille ductile (32, 132) est reçue après le serrage de la fixation filetée (68, 168) pour fixer la première feuille ductile (32, 132) sur la seconde feuille ductile (36, 136).

3. Agencement articulé (30, 130) selon la revendication 1 ou 2, dans lequel le composant (36, 136) comprend un passage (52, 152) s'étendant à partir de l'évidement (50, 150) pour recevoir une tige filetée (72, 172) de la fixation filetée (68, 168).

4. Agencement articulé (30, 130) selon la revendication 3, dans lequel le passage (52, 152) comprend une partie de réception d'écrou (54, 154) pour recevoir l'écrou fileté (55, 155) dans lequel la tige filetée (72, 172) de la fixation filetée (68, 168) est positionnable pour ainsi fixer la première feuille ductile (32, 132) sur le composant (36, 136).

5. Agencement articulé (30, 130) selon la revendication 4, dans lequel la partie de réception d'écrou (54, 154) comprend une région anti-rotation (90, 190) qui peut fonctionner pour empêcher la rotation de l'écrou fileté (55, 155) pendant la rotation de la tige filetée (72, 172) de la fixation filetée (68, 168) par rapport à l'écrou fileté (55, 155).

6. Agencement articulé (30) selon la revendication 5, dans lequel les bords (76) du passage (52) sont effilés pour définir la région anti-rotation (90).

7. Agencement articulé (130) selon la revendication 5, dans lequel les bords (176) du passage (152) comprennent des saillies dirigées vers l'intérieur (192) pour définir la région anti-rotation (190).

8. Agencement articulé (130) selon la revendication 7, dans lequel le composant (136) comprend des ouvertures (196) sensiblement adjacentes aux saillies dirigées vers l'intérieur (192) pour permettre la déformation localisée de la seconde feuille ductile (136).

9. Agencement articulé (30, 130) selon l'une quelconque des revendications 4 à 8, dans lequel le composant (36, 136) comprend un élément de retenue d'écrou (58, 158) qui peut être placé dans une ouverture (56, 156) de l'écrou fileté (55, 155) pour retenir l'écrou (55, 155) dans la partie de réception d'écrou (54, 154) avant l'insertion de la tige filetée (72, 172) de la fixation filetée (68, 168) dans l'ouverture (56, 156) de l'écrou fileté (55, 155).

10. Agencement articulé (30, 130) selon la revendication 9, dans lequel l'élément de retenue d'écrou (58, 158) peut être déplacé hors de l'ouverture (56, 156) de l'écrou fileté (55, 155) par la tige filetée (72, 172) de la fixation filetée (68, 168) pendant la rotation de serrage de la fixation filetée (68, 168).

11. Agencement articulé (30, 130) selon l'une quelconque des revendications précédentes, dans lequel la première feuille ductile (32, 132) comprend au moins un évidement de positionnement (64, 164) et le composant (36, 136) comprend au moins une saillie de positionnement complémentaire (66, 166).

12. Agencement articulé selon l'une quelconque des revendications précédentes, dans lequel le composant (34, 134) est sous la forme d'une seconde feuille ductile (36, 136) à laquelle la première feuille ductile (32, 132) est fixée, dans lequel la première feuille ductile (32, 132) est fixée le long d'un bord (38, 138) de la seconde feuille ductile (36, 136) de sorte que les plans (X-X, Y-Y) des première et seconde feuilles ductiles (32, 132, 36, 136) sont généralement perpendiculaires.

13. Agencement articulé selon l'une quelconque revendication précédente, dans lequel l'ouverture (40, 140) dans la première feuille ductile (32, 132) est définie sensiblement au centre de la région déformable (42, 142).

14. Agencement articulé selon l'une quelconque des revendications précédentes, dans lequel l'ouverture (40, 140) est définie par un élément annulaire (46, 146).

15. Agencement articulé selon la revendication 14, dans lequel la région déformable (40, 140) comprend une pluralité de nervures déformables (44, 144) s'étendant entre la feuille ductile (32, 132) et l'élément annulaire (46, 146) pour soutenir l'élément annulaire (46, 146) et permet sa déformation hors du plan (X-X) de la feuille ductile (32, 132) pendant le serrage de la fixation filetée (68, 168).

16. Agencement articulé selon la revendication 15, dans lequel les nervures déformables (44, 144) sont sous la forme de rayons (48, 148).

17. Agencement articulé selon la revendication 15 ou 16, dans lequel les nervures déformables (44, 144) ont une configuration généralement hélicoïdale ou en spirale.
